(19) Europäisches Patentamt
European Patent Office
Office européen des brevets

(11) **EP 2 033 447 B1**

(12) **EUROPÄISCHE PATENTSCHRIFT**

(45) Veröffentlichungstag und Bekanntmachung des Hinweises auf die Patenterteilung:
**27.03.2019  Patentblatt 2019/13**

(21) Anmeldenummer: **07764394.8**

(22) Anmeldetag: **21.06.2007**

(51) Int Cl.:
*G01J 3/45* *(2006.01)*          *G06T 9/00* *(2006.01)*
*H04N 19/593* *(2014.01)*       *H04N 19/11* *(2014.01)*
*H04N 19/46* *(2014.01)*         *H04N 19/91* *(2014.01)*

(86) Internationale Anmeldenummer:
**PCT/DE2007/001095**

(87) Internationale Veröffentlichungsnummer:
**WO 2008/000225 (03.01.2008 Gazette 2008/01)**

(54) **VERLUSTLOSES KOMPRESSIONSVERFAHREN FÜR INTERFEROGRAMME**

LOSSLESS COMPRESSION METHOD FOR INTERFEROGRAMS

PROCEDE DE COMPRESSION SANS PERTE POUR INTERFEROGRAMMES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.06.2006   DE 102006029539**

(43) Veröffentlichungstag der Anmeldung:
**11.03.2009   Patentblatt 2009/11**

(73) Patentinhaber: **Airbus Defence and Space GmbH 82024 Taufkirchen (DE)**

(72) Erfinder:
• **HENRICHS, Alois**
  **88048 Friedrichshafen (DE)**
• **WEISS, Stefan**
  **88048 Friedrichshafen (DE)**
• **MULLER, Adrien**
  **F-37540 Saint Cyr sur Loire (FR)**

(74) Vertreter: **Frenkel, Matthias Alexander et al Wuesthoff & Wuesthoff Patentanwälte PartG mbB Schweigerstrasse 2 81541 München (DE)**

(56) Entgegenhaltungen:
• BELFORE L. A. II: "An Adaptive Predictor for Efficient Lossless Coding of FTS Interferograms" PROCEEDINGS OF THE SPIE - THE INTERNATIONAL SOCIETY FOR OPTICAL ENGINEERING, MATHEMATICS OF DATA, IMAGE CODING, COMPRESSION, AND ENCRYPTION V, WITH APPLICATIONS, Bd. 4793, 9. Juli 2002 (2002-07-09), - 10. Juli 2002 (2002-07-10) Seiten 168-175, XP002455694 Seattle, WA, USA
• CHANEY L. W.: "Fundamentals of Fourier Transform Spectroscopy" TECHNICAL REPORT ORA PROJECT 05863, DEPARTMENT OF AEROSPACE ENGINEERING, HIGH ALTITUDE ENGINEERING LABORATORY, Februar 1967 (1967-02), Seiten I-VIII,1-46, XP002455695 University of Michigan, Ann Arbor, MI, USA
• MAILHES C ET AL: "Spectral image compression" JOURNAL OF OPTICS, MASSON EDITEUR. PARIS, FR, Bd. 21, Nr. 3, 1. Mai 1990 (1990-05-01), Seiten 121-132, XP020026911 ISSN: 0150-536X

**Beschreibung**

Die Erfindung betrifft ein Verfahren zur Datenkompression von Interferogramm-Bildern, wie sie insbesondere bei abbildenden Fourier-Transform-Spektrometern (FTS) vom Typ Michelson-Interferometer entstehen, z.B. bei satellitengestützten optischen Sensoren zur Analyse der Erdatmosphäre.

Aus dem Stand der Technik sind Fourier-Transform-Spektrometer bekannt. Fourier-Transform-Spektrometer sind passive Instrumente, die benutzt werden zur Spektralanalyse von Gasen, Flüssigkeiten oder Festkörpern.

Von den zur Zeit eingesetzten satellitengestützten Fourier-Transform-Spektrometern ist noch keine simultan am Detektor erzeugte räumliche Information erhältlich (z.B. MIPAS auf dem ENVISAT Satelliten, IMG auf dem ADEOS Satelliten).

Die Aufgabe, welche der vorliegenden Erfindung zugrunde liegt, ist ein verlustloses Kompressionsverfahren für Interferogramme anzugeben.

Das folgende Dokument:

BELFORE L. A. II: "An Adaptive Predictor for Efficient Lossless Coding of FTS Interferograms", PROCEEDINGS OF THE SPIE - THE INTERNATIONAL SOCIETY FOR OPTICAL ENGINEERING, MATHEMATICS OF DATA, IMAGE CODING, COMPRESSION, AND ENCRYPTION, WITH APPLICATIONS, Bd. 4793, 9-10 Juli 2002, Seiten 168-175, XP002455694, Seattle, WA, USA

offenbart bereits ein solches verlustloses Verfahren.

Die Aufgabe wird gelöst durch ein Verfahren nach Anspruch 1 und eine Vorrichtung nach Anspruch 7. Weitere vorteilhafte Ausgestaltungen der Erfindung finden sich in den Unteransprüchen.

Die Erfindung wird im Folgenden anhand der Zeichnungen beschrieben. Es zeigt:

Figur 1      Beispiel für das Ringmuster in der Bildebene eines abbildenden Michelson-Interferometers für eine feste Spiegelposition

Figur 2      Zeilen- und Spaltenindexdefinition des Flächendetektors

Figur 3      Beispielhafte Zuordnung $(i,j) \rightarrow i^2+j^2$ für jedes Pixel

Figur 4      Bezeichnung der Strahlen

Figur 5      Charakteristische Tabellen für Mittelachsen (oben) und Diagonalen (unten), für eine Beispiel-Detektormatrix von 512 x 512 Pixeln

Figur 6      Beispielhafte Ermittlung der vorhergesagten Intensität für alle 12 x 12 Pixel der Detektormatrix

Figur 7      Beispielhafte 12 x 12 Detektormatrix zur Erstellung des Referenzbildes

Figur 8      Bevorzugte Strahlen bei einem rechteckigen Detektor mit n x m (hier im Beispiel: 8 x 6) Pixeln

Figur 9      Michelson-Interferometeranordung

Figur 10     Interferogramme für monochromatische Strahlung oben: $\lambda$ = 1 $\mu$m, unten $\lambda$=0,1 $\mu$m

Figur 11     Geneigt zur optischen Achse einfallender Strahl Links: Ein erster Neigungswinkel ($\theta_1$) erzeugt bei gegebenen Spiegelabstand (d) eine erste Pfadlängendifferenz (opd1). Rechts: Ein zweiter Neigungswinkel ($\theta_2$) erzeugt bei gleichem Spiegelabstand (d) eine zweite Pfadlängendifferenz (opd2) verschieden von der ersten Pfadlängendifferenz (opd1).

Das erfindungsgemäße Verfahren wird nun anhand von Ausführungsbeispielen beschrieben.

Um das erfindungsgemäße Verfahren, d.h. die neuartige Kompression der Bilddaten zu verstehen, werden zunächst die Eigenschaften des zu komprimierenden Interferogramm-Bildes erläutert.

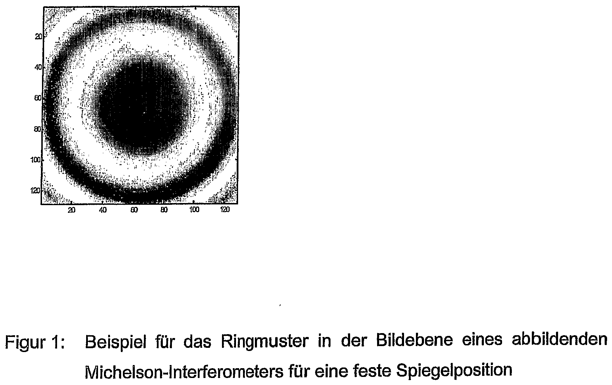

Ein Interferogramm-Bild weist eine konzentrische Kreisstruktur auf. Die vorgeschlagene Kompressionsmethode nutzt diese Interferenzringeigenschaft. Ein solches konzentrisches Ringmuster ist in Figur 1 gezeigt. Im Folgenden wird erklärt, wie Interferogramm-Bilder entstehen.

Die folgende Beschreibung erfolgt beispielhaft anhand von optischen Lichtwellen, also elektromagnetischer Strahlung im ultravioletten, sichtbaren oder infraroten Spektralbereich. Interferenz kann jedoch nicht nur mit Licht, sondern mit jeder Art von Wellen erzeugt werden, solange die Kohärenzlänge der Quelle lange genug ist. Das heißt, die Kohärenzlänge muss größer sein als die maximal gewählte Pfaddifferenz, die zwischen den zwei Teilstrahlen des gleichen Wellenzuges eingestellt wird.

Eine zu beobachtende Szene wird über eine Optik am Instrumenteingang kollimiert. Typisch sind afokale Teleskope, es gibt aber auch andere Verfahren. Es folgt ein Interferometer, das den kollimierten Lichtstrahl aufteilt, eine optische Pfadlängendifferenz (optical path difference) (opd) zwischen den beiden Teilstrahlen einführt, und dann beide Teilstrahlen wieder überlagert, also rekombiniert. Anschließend wird über eine abbildende Optik der rekombinierte Strahl auf eine Bildebene abgebildet.

In der Bildebene befindet sich ein Flächendetektor (Detektormatrix), der die Intensität des rekombinierten Lichtes detektiert und zeitlich (durch wiederholtes zeitliches Abtasten) sowie räumlich (durch eine Detektormatrix mit n x m Pixelelementen) auflöst. Winkelinformationen im Objektraum entsprechen räumlichen Informationen in der Bildebene.

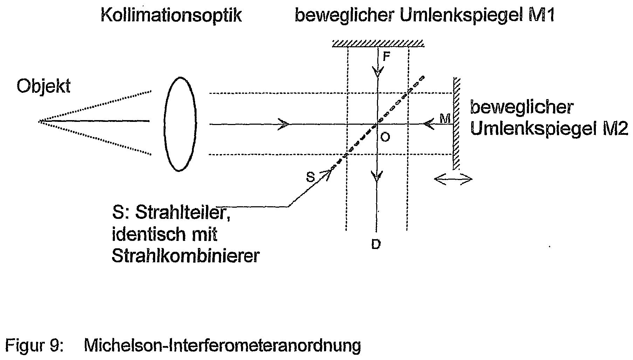

Ein Strahlteiler teilt das elektromagnetische Signal in einen transmittierten und in einen reflektierten Strahl auf. Beide Strahlen durchlaufen gesondert eine gewisse Weglänge, bevor sie wieder über einen Strahlkombinierer überlagert werden. Figur 9 zeigt eine bekannte kompakte Michelson-Interferometer Anordnung. In einer solchen Anordnung ist ein Strahlkombinierer (S) das gleiche Element wie ein Strahlteiler (S). Die am Strahlteiler (S) getrennten Strahlen werden durch zwei Umlenkspiegel (M1, M2) wieder Richtung des Strahlkombinierers (S) zurückgeschickt.

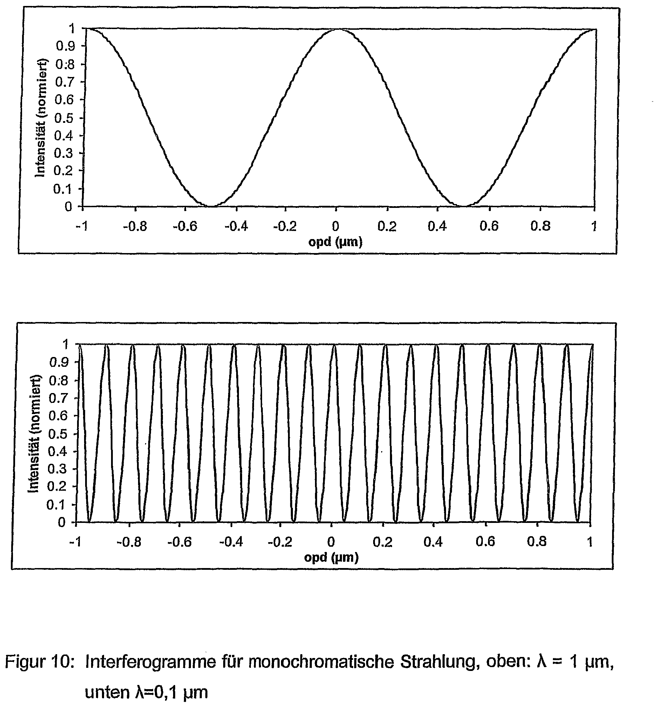

Ist die optische Weglänge der beiden getrennt verlaufenden Strahlabschnitte exakt die gleiche, so entsteht bei der Strahlrekombination konstruktive Interferenz. Verändert man nun die optische Pfadlängendifferenz (opd) der beiden Teilstrahlen, zum Beispiel durch Bewegung eines der Umlenkspiegel (hier M2), so variiert (ideale 50% : 50% Strahlaufteilung angenommen) das Intensitätssignal zwischen maximaler Interferenz und kompletter Auslöschung. Auslöschung entsteht jeweils bei einer Pfadlängendifferenz (opd) von einer ungeradzahligen Vielfachen der halben Wellenlänge des zu untersuchenden Lichts. Maximale Interferenz entsteht bei einer Pfadlängendifferenz von der ganzzahligen Vielfachen der Wellenlänge. Dies wird am Beispiel zweier Wellenlängen $\lambda$, nämlich $\lambda = 1\ \mu m$ und $\lambda = 0,1\ \mu m$, in Figur 10 veranschaulicht.

Für ein Lichtgemisch aus verschiedenen Wellenlängen ergibt sich im Interferogramm die lineare Superposition der Interferogramme der einzelnen Wellenlängen.

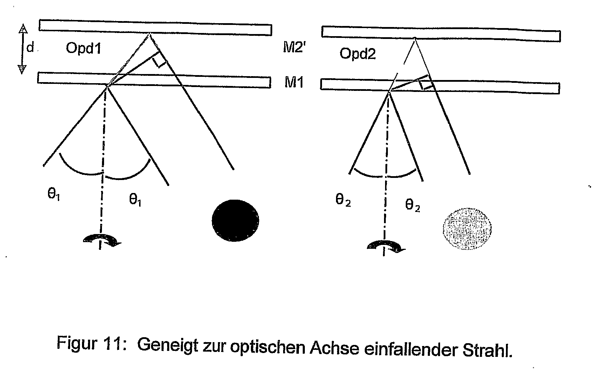

Bisher wurde einfallendes Licht betrachtet, das parallel zur optischen Achse verläuft. Bei abbildenden Michelson-Interferometern werden Objektpunkte durch die Kollimationsoptik in kollimierte Strahlen transformiert, die im Interferometer unter einem Neigungswinkel ($\theta$) geneigt zur optischen Achse verlaufen. Figur 11 zeigt schematisch die Strahlengeometrie und die Pfadlängendifferenz (opd) zwischen den zwei Teilstrahlen. Dabei ist ein zweiter beweglicher Spiegel (M2') das äquivalente Abbild des ersten beweglichen Spiegels (M2), so dass in dieser Prinzipdarstellung der zweite bewegliche Spiegel (M2') und der Spiegel (M1) parallele Spiegelflächen haben. Die Intensität des überlagerten rekombinierten Strahls ist wieder von der Pfadlängendifferenz (opd) abhängig und variiert demnach mit dem Neigungswinkel ($\theta$). Die ursprünglich verschiedenen Neigungswinkel ($\theta$) des kollimierten Strahls werden nach der Abbildung mit einer Brennweite (f) in der Bildebene als Orte verschiedenen Abstands (r) zur Bildmitte detektiert. Bildmitte ist hier der Schnittpunkt zwischen Optischer Achse und Bildebene.

Die Neigungswinkelabhängigkeit der Intensität ist rotationssymmetrisch zur optischen Achse und erzeugt nach Abbildung des kollimierten rekombinierten Strahls auf eine Bildebene ein Ringmuster, zentriert um die optische Achse (siehe Figur 1).

Wird in dieser Bildebene ein Matrixdetektor mit n x n Pixelelementen angebracht (mit Pixelgröße a x a), so kann dieses Ringmuster Pixel für Pixel als zweidimensionales, ortsaufgelöstes Abbild der Szene mit dem Matrixdetektor erfasst und ausgelesen werden.

Für Spiegelpositionen (d) gleich 0 wird für alle Neigungswinkel ($\theta$) die Pfadlängendifferenz (opd) gleich 0. Diese Spiegelposition entspricht der ZPD (zero path difference) und maximale Intensität ist für die ganze Bildebene vorhanden.

Wird der bewegliche Spiegel (M2) von der Mittelstellung d=0 wegbewegt, so verändert sich die Spiegelposition (d) und die Pfadlängendifferenz (opd) entsprechend. Das Ringmuster in der Bildebene verändert sich derart, dass vom Zentrum ausgehend neue Ringe erscheinen und nach außen wandern. Die Anzahl der Ringe wächst mit zunehmender Spiegelposition (d).

Der Kontrast des Ringmusters hängt auch von der Spiegelposition (d) ab und auch von dem zu beobachtenden Spektrum.

Während der Bewegung des beweglichen Spiegels (M2), also während der Variation der Spiegelposition (d), wird sich das zweidimensionale Interferogramm-Bild in der Bildebene verändern. Durch den Flächendetektor wird das Interferogramm-Bild regelmäßig zeitlich abgetastet und ausgelesen.

Für jede Abtastperiode ist also ein zweidimensionales Interferogramm-Bild verfügbar. Jedes dieser Bilder wird dann über das erfindungsgemäße Kompressionsverfahren weiterverarbeitet. Durch die große Pixelanzahl und die hohen Bildaufnahmeraten während der Spiegelbewegung entstehen nach der Digitalisierung des Detektormatrixsignals hohe Datenraten, die in zukünftigen Anwendungen ohne stark verbesserte Kompression die Übertragungskapazität übersteigen können und unnötig hohe Speicherkapazität erfordern werden.

Das Interferogramm in der Bildebene der Detektormatrix zeigt bei typischen Instrumentanordnungen ein charakteristisches konzentrisches Ringmuster, welches sowohl mit der optischen Pfaddifferenz des Interferometers als auch mit der Wellenzahl variiert. Dieses Ringmuster wird in dem erfindungsgemäßen Kompressionsverfahren ausgenutzt, um ein Referenzbild (vorhergesagtes oder vorausberechnetes Bild) zu erzeugen.

Das Referenzbild ist vollständig durch wenige charakteristische Daten bestimmt. Diese charakteristischen Daten benötigen lediglich ein Minimum an Datenvolumen. In der Kompression wird dann noch die Differenz zwischen dem aktuellen Bild und dem Referenzbild codiert, was eine erhebliche Datenmengenreduktion (im digitalisierten Signal) bedeutet. Solche Differenzen treten auf durch zum Beispiel Variation der spektralen Zusammensetzung der Beobachtungsszene mit der Blickrichtung, diverse im Sensor vorhandene Imperfektionen, wie zum Beispiel Detektorrauschen oder unkalibrierte Veränderungen des Pixel-zu-pixel-Nullabgleichswertes (dark signal non-uniformity) und des Pixel-zu-pixel-Verstärkungsfakors (photo response non uniformity). Die Datenübertragung enthält dann diese charakteristischen Daten des Referenzbildes und das komprimierte Differenzbild. Nach der Übertragung ist durch die verlustlose Kompression wieder eine originalgetreue Rekonstruktion des ursprünglichen Interferogramm-Bildes möglich.

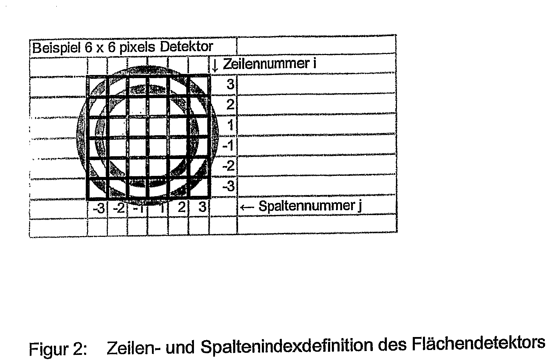

Die Pixelnummerierung des zweidimensionalen Flächendetektors ist wie folgt: In der Mitte des Detektors sei der Koordinatenursprung, so dass dieser Ursprung zwischen den vier in einem gedachten 2x2 Pixel-Quartett befindlichen Pixeln liegt. Ist die Zeilen- oder Spaltenanzahl ungerade, so wird entsprechend die eine überzählige Zeile oder Spalte am Rande nicht berücksichtigt. Die Pixel werden nun von der Detektormitte ausgehend mit Zeilenindex i und Spaltenindex j versehen, wie in Figur 2 beispielhaft gezeigt. Die Werte i=0 und j=0 existieren nicht.

Jedes Pixel ist durch das Indexpaar (i, j) in seiner Position innerhalb der Matrix eindeutig bestimmt. Um die Rotationssymmetrie auszunutzen, wird jedem Pixel ein Radiuswert zugeordnet, um ein Maß für den Abstand des Pixels zum Koordinatenursprung zu definieren. Für die Kompression werden die Radiuswerte weniger Pixel (die auf bevorzugten Strahlen liegen) als Stützstellen für Interpolation der Radiuswerte der anderen Pixel verwendet. Für die weitere Beschreibung wird als Radiuswert die Abbildungsvorschrift $f(i,j)= r^2(i, j) = i^2 + j^2$ gewählt. Diese Abbildungsvorschrift ist allerdings nur als Beispiel gewählt. Andere Abbildungsvorschriften sind ebenfalls möglich und für das erfinderische Verfahren geeignet. Wichtig ist die Erzeugung von Stützstellen, derart, dass für Pixel, die nicht auf den bevorzugten Strahlen liegen, eine möglichst einfache und präzise Interpolation gemacht werden kann.

Zum Beispiel eignen sich die Abbildungsvorschriften $f(i,j) = r(i,j) = (i^2 + j^2)^{\wedge(1/2)}$ oder $f(i,j) = r^3(i,j) = (i^2 + j^2)^{\wedge(3/2)}$. Allgemein können alle Abbildungsvorschriften verwendet werden, welche die konzentrische Kreisstruktur des Interferogramm-Bildes ausnutzen.

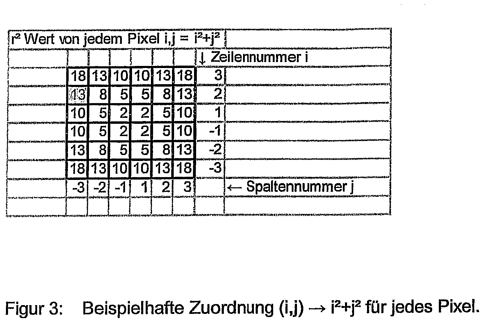

Figur 3 zeigt eine beispielhafte Zuordnung unter Verwendung des Radiuswertes $r^2(i, j) = i^2 + j^2$. Für das Pixel mit der Position (i, j) := (2, -3) ergibt sich dann der Radiuswert $2^2 + (-3)^2 = 13$. Das zentrale 2x2 Elementquartett hat die folgenden Pixelindices: (i, j) = {(1, 1), (1, -1), (-1, -1), (-1, 1)}.

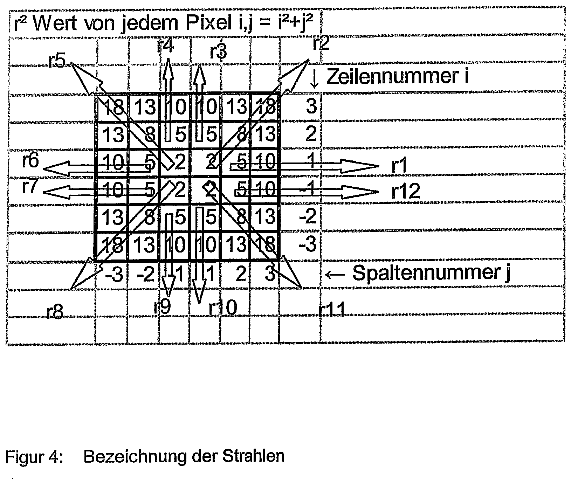

Die Strahlen, die von diesen vier Pixeln nach außen gehen, sind bevorzugte Strahlen und dienen zur Ermittlung der Stützstellen für das komplette Referenzbild. Bevorzugte Strahlen sind dabei die Diagonalstrahlen und die Mittelachsenstrahlen. Die Diagonalstrahlen starten bei den vier Pixeln des zentralen 2x2 Elementquartetts. Die Mittelachsenstrahlen starten jeweils ein Pixel weiter draußen. Die Nomenklatur der Strahlen lässt sich aus Figur 4 entnehmen. Dabei lauten die Strahlen längs der Mittelachsen (Mittelachsenstrahlen): r1, r3, r4, r6, r7, r9, r10, r12. Die Strahlen längs der 4 Diagonalen lauten (Diagonalstrahlen): r2, r5, r8, r11.

Als nächstes wird das Erstellen der zwei charakteristischen Tabellen für das Referenzbild beschrieben.

Für die Mittelachsenstrahlen wird jedem $r^2(i,j)$-Wert auf der Mittelachse (es gibt immer 8 Mittelachsenstrahlen-Pixel mit gleichem $r^2(i,j)$-Wert) der Mittelwert aus den in diesen Pixeln tatsächlich detektierten 8 Intensitäten zugeordnet. Prinzipiell können auch gewichtete Mittelwerte gebildet werden oder andere statistische Momente benutzt werden. Dadurch können einzelne Regionen im Interferogramm-Bild bevorzugt werden, was bei gewisser a priori Kenntnis des Interferogrammbilds die Kompression noch effektiver machen kann, auf Kosten zusätzlichen Prozessierungsaufwands.

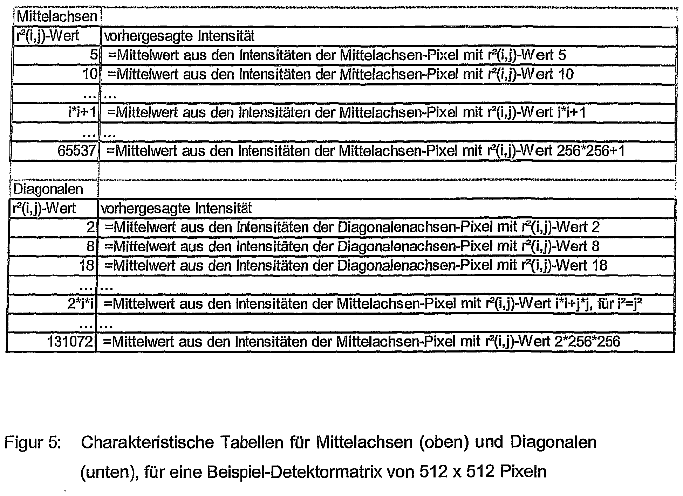

Für die Diagonalstrahlen wird jedem $r^2(i, j)$-Wert auf der Diagonalachse (es gibt immer 4 Diagonalstrahlen-Pixel mit gleichem $r^2(i, j)$-Wert) der Mittelwert aus den in diesen Pixeln tatsächlich detektierten 4 Intensitäten zugeordnet (siehe Figur 5).

Auch hier können, wie oben bei den Mittelachsen beschrieben, andere statistische Operationen angewendet werden.

Nun kann das Referenzbild erzeugt werden: Jedem Pixel, das auf einer der bevorzugten Achsen, d.h. Diagonalstrahlen bzw. Mittelachsenstrahlen, liegt, wird eine vorhergesagte Intensität gemäß charakteristischer Tabelle zugeordnet.

Mit anderen Worten lässt sich die Zuordnung wie folgt beschreiben. Sei $Q := \{r^2(i, j)|(i, j)$ *aus bevorzugter Achse des Flächendetektors*$\}$ die Menge der Radiuswerte aus den bevorzugten Achsen des Flächendetektors. Für alle Radiuswerte $\alpha$ aus Q, werden die Pixelindizes (i, j) mit den gleichen Radiuswerten wie folgt zusammengefasst:

$$M_\alpha := \left\{ (i,j) \text{ aus bevorzugter Achse des Flächen} \det ektors \mid r^2(i,j) = \alpha \right\}.$$

Die charakteristischen Tabellen (je eine Tabelle für die Diagonalachse und die Mittelachse) sind dann durch die Abbildung

$$R(\alpha) := \frac{1}{card M_\alpha} \cdot \sum_{(i,j) \in M_\alpha} I(i,j)$$

für Radiuswerte $\alpha$ aus Q gegeben, wobei I(i, j) die tatsächliche detektierte Intensität für den Pixelindex (i, j) und $card M_\alpha$ die Anzahl der Elemente in der Menge $M_\alpha$ bezeichnet.

Mit Hilfe dieser charakteristischen Tabellen wird das Referenzbild R(i, j) durch Zuordnung der vorhergesagten Intensitäten für jeden Pixelindex (i, j) wie folgt bestimmt:

$$R(i,j) := R(\alpha), \text{ wenn } (i,j) \text{ Element von } M_\alpha \text{ ist.}$$

Für große Matrizen treten gelegentlich 2 gleiche $r^2$(i, j)-Werte (Radiuswerte) auf der Diagonale und der Mittelachse auf. In diesem Fall wird die entsprechende Intensität aus einem Achsentyp für beide Pixel zugewiesen.

Für die übrigen Pixel des Detektors, also denjenigen, die nicht auf den bevorzugten Achsen liegen, wird eine vorhergesagte Intensität durch Interpolation aus den Referenzbildintensitäten derjenigen Pixel ermittelt, die auf den bevorzugten Achsen liegen:

$$R(i,j) := Interpol(R(\alpha)), \text{ wenn } (i,j) \text{ nicht Element von } M_\alpha \text{ ist.}$$

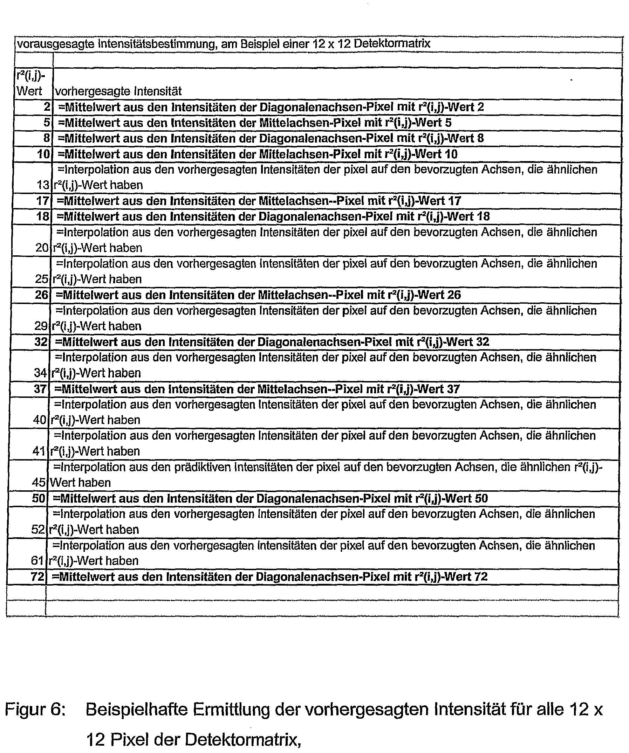

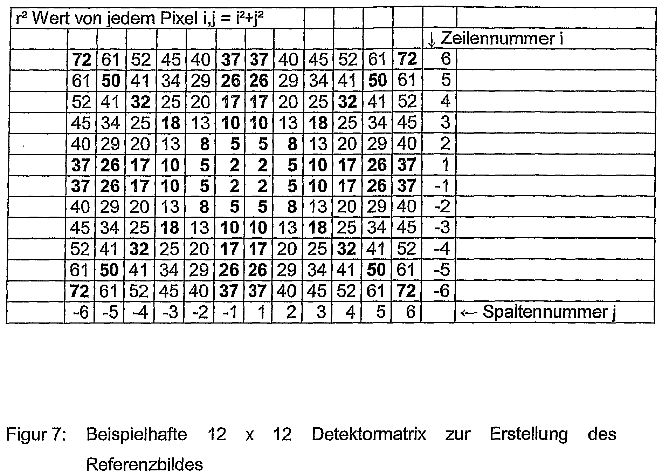

Alle Interpolationsmethoden sind dafür grundsätzlich geeignet. Das Verfahren ist beispielhaft in Figur 6 beschrieben. Die zugrunde liegende Detektormatrix für Figur 6 ist in Figur 7 gezeigt. Das Referenzbild mit Referenzintensitäten R(i, j) für jedes Pixel ist nun vollständig erzeugt.

Das Differenzbild entsteht durch pixelweise Differenzbildung der tatsächlichen Intensitäten I(i, j) und der Referenzintensitäten R(i, j):

$$D(i, j) = I(i, j) - R(i, j),$$

für alle i,j.

Die Pixelwerte des Differenzbildes, also die Differenzintensitäten, werden durch einen Kompressionsalgorithmus, etwa Huffman-Kodierung codiert. Wenn sehr viele Interferogramm-Bilder mit unterschiedlicher Statistik zu übertragen sind, kann wahlweise eine auf diese Statistik optimierte Code-Tabelle angewendet werden. Genauso auch werden die 2 charakteristischen Tabellen codiert.

Folgende Elemente werden übertragen:

- Codiertes Differenzbild;
- die zwei kodierten charakteristischen Tabellen für vorhergesagte Intensitäten als Funktion der $r^2$(i, j)-Werte auf den Mittelachsen und Diagonalenachsen;
- eine Information (z.B. Index) zur aktuell benutzten Code-Tabelle.

Die oben erwähnten zwei charakteristischen Tabellen sind: Eine Tabelle mit Wertepaaren ($r^2$(i, j), Intensität) für die Pixel auf den Mittelachsen und eine solche Tabelle für die Pixel auf den Diagonalachsen.

Die Huffman-Kodierung wurde beispielhaft erwähnt. Andere bekannte Entropie-Kodierverfahren wie zum Beispiel Varianten des Lempl-Ziv-Welsh Verfahrens oder auch arithmetic-coding-Verfahren sind ebenfalls geeignet und können verwendet werden. In Untersuchungen wurde die Eignung insbesondere der Huffman-Kodierung gezeigt.

Nach der Übertragung werden folgende Schritte gemacht:

- Dekodieren des Differenzbildes anhand der Huffman-Tabelle
- Rekonstruktion des vorhergesagten Bildes, anhand der zwei charakteristischen Tabellen und Interpolation. Dabei muss das Interpolationsverfahren die gleichen Ergebnisse liefern wie das im Sensor verwendete.

- Rekonstruktion des Originalbildes I(i, j):

$$(3) \; I(i, j) = R(i, j) + D(i, j),$$

für alle i,j.

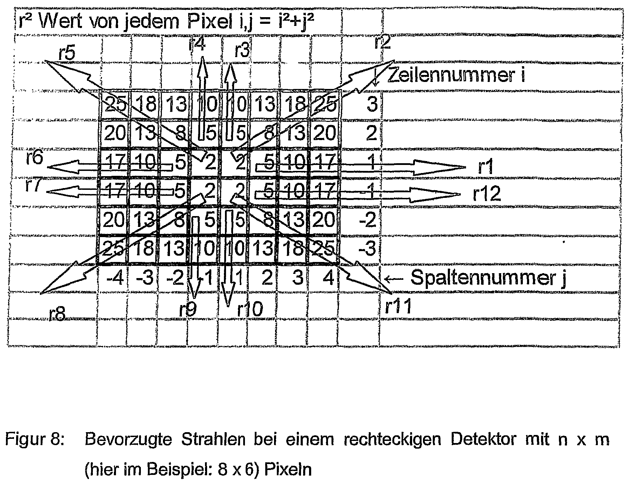

Bisher wurde das Kompressionsverfahren beschrieben für quadratische Detektormatrizen mit n x n Pixeln, mit dem quadratischen Pixelpitchmaß a x a. Das erfindungsgemäße Kompressionsverfahren wird in einer erweiterten Form auch gültig für Detektormatrizen n x m mit ungleichen Zeilen- (n) und Spaltenanzahlen (m) und rechteckigen Pixelmaßen a x b. Dies wird im folgenden als eine weitere Ausführungsform des erfindungsgemäßen Verfahrens beschrieben. Die dann im Allgemeinen rechteckige Detektormatrix mit rechteckigen Pixelpitchmaßen braucht jetzt 3 charakteristische Tabellen zur Erzeugung des Referenzbildes, wobei die folgenden charakteristischen Strahlen verwendet werden (siehe Figur 8).

Die 3 charakteristischen Tabellen werden also aus den 3 bevorzugten Strahlentypen wie folgt gewonnen:

- längs der Zeilen-Mittelachsen r1, r6, r7, r12,
- längs der Spalten-Mittelachsen r3, r4, r9, r10,
- längs der Diagonalen r2, r5, r8, r11.

Die charakteristische Tabelle, die aus den Diagonalen erzeugt wird, verwendet Pixel (i, j) gemäß einer speziellen Vorschrift, zum Beispiel gemäß der Nächster-Nachbar-Methode (Nearest-Neighbor). Im Beispiel, welches in Figur 8 gezeigt wird und bei Anwendung beispielsweise der Nächster-Nachbar-Methode stehen folgende $r^2(i, j)$-Werte in dieser Tabelle: 2 (=direkt), 8 (=nächster Nachbar), 13 (=nächster Nachbar), 18 (=nächster Nachbar), 25 (=direkt). Nach Erstellung der charakteristischen Tabellen erfolgen die weiteren Schritte in Analogie zu dem für quadratische Matrizen beschriebenem Verfahren.

Des weiteren wird eine Vorrichtung offenbart, welche zur Durchführung des erfindungsgemäßen Verfahrens eingerichtet ist.

## Patentansprüche

1. Verfahren zur verlustlosen Datenkompression von zweidimensionalen und rotationssymmetrischen Interferogramm-Bildern, die von den intensitätsmessenden Pixeln einer Detektormatrix (I(i,j)) erfasst wurden, **gekennzeichnet durch** die folgenden Schritte:

   - Zuordnen eines Radiuswertes f(i, j) gemäß einer Abbildungsvorschrift, welche die konzentrische Kreisstruktur der Interferogramm-Bilder ausnutzt, zu jedem Pixel (i, j) der Detektormatrix,
   - ausgehend von einem 2x2 Pixel-Quartett in der Mitte der Detektormatrix, durch bevorzugte Strahlen, die von diesen 4 Pixeln nach außen gehen, Definieren von zwei Arten von bevorzugten Achsen, wobei die erste Art von bevorzugten Achsen Diagonalachsen sind, und die zweite Art von bevorzugten Achsen Mittelachsen sind,
   - Erzeugung von charakteristischen Tabellen für die Vorhersage der Intensitäten als Funktion von den Radiuswerten f(i,j) auf den bevorzugten Achsen unter Verwendung von Intensitätssignalen der Detektormatrix (I(i,j)),
   - Erzeugen eines Referenzbildes R(i,j) unter Verwendung der charakteristischen Tabellen, und
   - Komprimierung der Interferogramm-Bilder unter Verwendung des so erzeugten Referenzbildes R(i,j).

2. Verfahren nach Anspruch 1 ferner umfassend den Schritt Bestimmung eines Differenzbildes (D(i,j)) unter Verwendung der Intensitäten der Detektormatrix (I(i,j)) und des Referenzbildes (R(i,j)),

3. Verfahren nach Anspruch 2 ferner umfassend den Schritt Kodierung des Differenzbildes (D(i,j)) durch einen Kompressionsalgorithmus.

4. Verfahren nach Anspruch 3 ferner umfassend den Schritt Übertragung des kodierten Differenzbildes (D(i,j)) und der charakteristischen Tabellen.

5. Verfahren nach Anspruch 4 ferner umfassend die Schritte Dekodierung der Differenzbildes (D(i,j)),

Rekonstruktion des Referenzbildes (R(i,j)) anhand der charakteristischen Tabellen und
Rekonstruktion der Intensitäten der Detektormatrix (I(i,j)).

**6.** Verfahren nach einem der Ansprüche 1 bis 5, wobei die Intensitäten der Detektormatrix (I(i,j)) durch die kreisförmigen zweidimensionalen Interferenzmuster von abbildenden Fourier-Transform-Spektrometern gegeben sind.

**7.** Vorrichtung zur verlustlosen Datenkompression eingerichtet zur Durchführung eines Verfahrens nach einem der Ansprüche 1 bis 6.

**Claims**

**1.** A method for lossless data compression of two-dimensional and rotationally symmetric interferogram images obtained from intensity measuring pixels of a detector matrix (I(i, j)) have been detected,
**characterized by** the following steps:

- assigning a radius value f(i, j) according to a mapping rule, which exploits the concentric circular structure of the interferogram images, to each pixel (i, j) of the detector matrix,
- starting from a 2x2 pixel quartet in the center of the detector matrix by preferred rays passing from these 4 pixels to the outside, defining two types of preferred axes, wherein the first type of preferred axes are diagonal axes, and second type of preferred axes are central axes,
- generating from characteristic tables for predicting the intensities as a function of the radius values f(i, j) on the preferred axes using intensity signals of the detector matrix (I (i, j)),
- generating a reference image R(i, j) using the characteristic tables, and
- compression of the interferogram images using the so generated reference image R (i, j).

**2.** The method of claim 1, further comprising the step of determination of difference image (D(i, j)) using the intensities of the detector matrix (I (i, j)) and the reference image (R (i, j)).

**3.** The method of claim 1, further comprising the step of encoding the difference image (D(i, j)) by a compression algorithm.

**4.** The method of claim 3, further comprising the step of transmitting the encoded difference image (D(i, j)) and the characteristic tables.

**5.** The method of claim 4, further comprising the steps of decoding the difference image (D(i, j)),
reconstruction of the reference image (R(i, j)) based on the characteristic tables and
reconstruction of the intensities of the detector matrix (I(i, j)).

**6.** The method according to any one of the claims 1 to 5, wherein the intensities of the detector matrix (I (i, j)) are given by the circular two-dimensional interference pattern of imaging Fourier transform spectrometers.

**7.** Device for lossless data compression set up to carry out a method according to any one of claims 1 to 6.

**Revendications**

**1.** Procédé de compression de données sans perte pour interférogrammes à deux dimensions et à symétrie de révolution acquis au moyen des pixels de mesure d'intensité d'une matrice de détection (I(i,j)),
**caractérisé par** les étapes suivantes :

- l'affectation d'une valeur de rayon f(i,j) à chaque pixel (i,j) de ladite matrice de détection, conformément à une règle de représentation qui exploite la structure circulaire concentrique des interférogrammes,
- la définition, en partant d'un quartet de pixels 2x2 au centre de la matrice de détection et à l'aide de faisceaux préférés qui partent de ces 4 pixels et vont vers l'extérieur, la définition de deux types d'axes préférés, le premier type d'axes préférés consistant en des axes diagonaux, et le second type d'axes préférés en des axes médians,
- la production de tables caractéristiques pour la prévision des intensités en fonction de valeurs de rayon f(i,j) sur les axes préférés, sur la base de signaux d'intensité de la matrice de détection (I(i,j)),

- la production d'une image de référence (R(i,j)) sur la base desdites tables caractéristiques, et
- la compression des interférogrammes sur la base de ladite image de référence R(i,j) ainsi produite.

2.  Procédé selon la revendication 1 comprenant en outre l'étape de la détermination d'une image différentielle (D(i,j)) sur la base des intensités de la matrice de détection (I(i,j)) et de l'image de référence (R(i,j)).

3.  Procédé selon la revendication 2 comprenant en outre l'étape du codage de l'image différentielle (D(i,j)) à l'aide d'un algorithme de compression.

4.  Procédé selon la revendication 3 comprenant en outre l'étape de la transmission de l'image différentielle (D(i,j)) codée et des tables caractéristiques.

5.  Procédé selon la revendication 4 comprenant en outre l'étape du décodage de l'image différentielle (D(i,j)) codée, la reconstruction de l'image de référence (R(i,j)) à l'aide des tables caractéristiques et la reconstruction des intensités de la matrice de détection (I(i,j)).

6.  Procédé selon l'une des revendications 1 à 5, les intensités de la matrice de détection (I(i,j)) étant données par les modèles d'interférence bidimensionnels circulaires issus de spectromètres d'imagerie à transformée de Fourier.

7.  Dispositif de compression de données sans perte conçu pour la mise en oeuvre d'un procédé selon l'une des revendications 1 à 6.

Figur 1: Beispiel für das Ringmuster in der Bildebene eines abbildenden Michelson-Interferometers für eine feste Spiegelposition

Figur 2:  Zeilen- und Spaltenindexdefinition des Flächendetektors

| r² Wert von jedem Pixel i,j = i²+j² | | | | | | | |
|---|---|---|---|---|---|---|---|
| | | | | | | ↓ Zeilennummer i | |
| | 18 | 13 | 10 | 10 | 13 | 18 | 3 |
| | 13 | 8 | 5 | 5 | 8 | 13 | 2 |
| | 10 | 5 | 2 | 2 | 5 | 10 | 1 |
| | 10 | 5 | 2 | 2 | 5 | 10 | -1 |
| | 13 | 8 | 5 | 5 | 8 | 13 | -2 |
| | 18 | 13 | 10 | 10 | 13 | 18 | -3 |
| | -3 | -2 | -1 | 1 | 2 | 3 | ← Spaltennummer j |

Figur 3:  Beispielhafte Zuordnung (i,j) → i²+j² für jedes Pixel.

11

Figur 4: Bezeichnung der Strahlen

| Mittelachsen | |
|---|---|
| $r^2(i,j)$-Wert | vorhergesagte Intensität |
| 5 | =Mittelwert aus den Intensitäten der Mittelachsen-Pixel mit $r^2(i,j)$-Wert 5 |
| 10 | =Mittelwert aus den Intensitäten der Mittelachsen-Pixel mit $r^2(i,j)$-Wert 10 |
| ... | ... |
| $i*i+1$ | =Mittelwert aus den Intensitäten der Mittelachsen-Pixel mit $r^2(i,j)$-Wert $i*i+1$ |
| ... | ... |
| 65537 | =Mittelwert aus den Intensitäten der Mittelachsen-Pixel mit $r^2(i,j)$-Wert 256*256+1 |

| Diagonalen | |
|---|---|
| $r^2(i,j)$-Wert | vorhergesagte Intensität |
| 2 | =Mittelwert aus den Intensitäten der Diagonalenachsen-Pixel mit $r^2(i,j)$-Wert 2 |
| 8 | =Mittelwert aus den Intensitäten der Diagonalenachsen-Pixel mit $r^2(i,j)$-Wert 8 |
| 18 | =Mittelwert aus den Intensitäten der Diagonalenachsen-Pixel mit $r^2(i,j)$-Wert 18 |
| ... | ... |
| $2*i*i$ | =Mittelwert aus den Intensitäten der Mittelachsen-Pixel mit $r^2(i,j)$-Wert $i*i+j*j$, für $i^2=j^2$ |
| ... | ... |
| 131072 | =Mittelwert aus den Intensitäten der Mittelachsen-Pixel mit $r^2(i,j)$-Wert 2*256*256 |

Figur 5: Charakteristische Tabellen für Mittelachsen (oben) und Diagonalen (unten), für eine Beispiel-Detektormatrix von 512 x 512 Pixeln

| r²(i,j)-Wert | vorhergesagte Intensität |
|---|---|
| | vorausgesagte Intensitätsbestimmung, am Beispiel einer 12 x 12 Detektormatrix |
| 2 | =Mittelwert aus den Intensitäten der Diagonalenachsen-Pixel mit r²(i,j)-Wert 2 |
| 5 | =Mittelwert aus den Intensitäten der Mittelachsen-Pixel mit r²(i,j)-Wert 5 |
| 8 | =Mittelwert aus den Intensitäten der Diagonalenachsen-Pixel mit r²(i,j)-Wert 8 |
| 10 | =Mittelwert aus den Intensitäten der Mittelachsen-Pixel mit r²(i,j)-Wert 10 |
| 13 | =Interpolation aus den vorhergesagten Intensitäten der pixel auf den bevorzugten Achsen, die ähnlichen r²(i,j)-Wert haben |
| 17 | =Mittelwert aus den Intensitäten der Mittelachsen--Pixel mit r²(i,j)-Wert 17 |
| 18 | =Mittelwert aus den Intensitäten der Diagonalenachsen-Pixel mit r²(i,j)-Wert 18 |
| 20 | =Interpolation aus den vorhergesagten Intensitäten der pixel auf den bevorzugten Achsen, die ähnlichen r²(i,j)-Wert haben |
| 25 | =Interpolation aus den vorhergesagten Intensitäten der pixel auf den bevorzugten Achsen, die ähnlichen r²(i,j)-Wert haben |
| 26 | =Mittelwert aus den Intensitäten der Mittelachsen--Pixel mit r²(i,j)-Wert 26 |
| 29 | =Interpolation aus den vorhergesagten Intensitäten der pixel auf den bevorzugten Achsen, die ähnlichen r²(i,j)-Wert haben |
| 32 | =Mittelwert aus den Intensitäten der Diagonalenachsen-Pixel mit r²(i,j)-Wert 32 |
| 34 | =Interpolation aus den vorhergesagten Intensitäten der pixel auf den bevorzugten Achsen, die ähnlichen r²(i,j)-Wert haben |
| 37 | =Mittelwert aus den Intensitäten der Mittelachsen--Pixel mit r²(i,j)-Wert 37 |
| 40 | =Interpolation aus den vorhergesagten Intensitäten der pixel auf den bevorzugten Achsen, die ähnlichen r²(i,j)-Wert haben |
| 41 | =Interpolation aus den vorhergesagten Intensitäten der pixel auf den bevorzugten Achsen, die ähnlichen r²(i,j)-Wert haben |
| 45 | =Interpolation aus den prädiktiven Intensitäten der pixel auf den bevorzugten Achsen, die ähnlichen r²(i,j)-Wert haben |
| 50 | =Mittelwert aus den Intensitäten der Diagonalenachsen-Pixel mit r²(i,j)-Wert 50 |
| 52 | =Interpolation aus den vorhergesagten Intensitäten der pixel auf den bevorzugten Achsen, die ähnlichen r²(i,j)-Wert haben |
| 61 | =Interpolation aus den vorhergesagten Intensitäten der pixel auf den bevorzugten Achsen, die ähnlichen r²(i,j)-Wert haben |
| 72 | =Mittelwert aus den Intensitäten der Diagonalenachsen-Pixel mit r²(i,j)-Wert 72 |

Figur 6:   Beispielhafte Ermittlung der vorhergesagten Intensität für alle 12 x 12 Pixel der Detektormatrix,

| r² Wert von jedem Pixel i,j = i²+j² | | | | | | | | | | | | | |
|---|---|---|---|---|---|---|---|---|---|---|---|---|---|
| | | | | | | | | | | | | | ↓ Zeilennummer i |
| | **72** | 61 | 52 | 45 | 40 | **37** | **37** | 40 | 45 | 52 | 61 | **72** | 6 |
| | 61 | **50** | 41 | 34 | 29 | **26** | **26** | 29 | 34 | 41 | **50** | 61 | 5 |
| | 52 | 41 | **32** | 25 | 20 | **17** | **17** | 20 | 25 | **32** | 41 | 52 | 4 |
| | 45 | 34 | 25 | **18** | 13 | **10** | **10** | 13 | **18** | 25 | 34 | 45 | 3 |
| | 40 | 29 | 20 | 13 | **8** | **5** | **5** | **8** | 13 | 20 | 29 | 40 | 2 |
| | **37** | **26** | **17** | **10** | **5** | **2** | **2** | **5** | **10** | **17** | **26** | **37** | 1 |
| | **37** | **26** | **17** | **10** | **5** | **2** | **2** | **5** | **10** | **17** | **26** | **37** | -1 |
| | 40 | 29 | 20 | 13 | **8** | **5** | **5** | **8** | 13 | 20 | 29 | 40 | -2 |
| | 45 | 34 | 25 | **18** | 13 | **10** | **10** | 13 | **18** | 25 | 34 | 45 | -3 |
| | 52 | 41 | **32** | 25 | 20 | **17** | **17** | 20 | 25 | **32** | 41 | 52 | -4 |
| | 61 | **50** | 41 | 34 | 29 | **26** | **26** | 29 | 34 | 41 | **50** | 61 | -5 |
| | **72** | 61 | 52 | 45 | 40 | **37** | **37** | 40 | 45 | 52 | 61 | **72** | -6 |
| | -6 | -5 | -4 | -3 | -2 | -1 | 1 | 2 | 3 | 4 | 5 | 6 | ← Spaltennummer j |

Figur 7:  Beispielhafte 12 x 12 Detektormatrix zur Erstellung des Referenzbildes

Figur 8: Bevorzugte Strahlen bei einem rechteckigen Detektor mit n x m (hier im Beispiel: 8 x 6) Pixeln

Kollimationsoptik      beweglicher Umlenkspiegel M1

Objekt

F

M  beweglicher
Umlenkspiegel M2

O

S

D

S: Strahlteiler,
identisch mit
Strahlkombinierer

Figur 9:   Michelson-Interferometeranordnung

Figur 10: Interferogramme für monochromatische Strahlung, oben: λ = 1 μm, unten λ=0,1 μm

Figur 11: Geneigt zur optischen Achse einfallender Strahl.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BELFORE L. A. II.** An Adaptive Predictor for Efficient Lossless Coding of FTS Interferograms. *PROCEEDINGS OF THE SPIE - THE INTERNATIONAL SOCIETY FOR OPTICAL ENGINEERING, MATHEMATICS OF DATA, IMAGE CODING, COMPRESSION, AND ENCRYPTION, WITH APPLICATIONS*, 09. Juli 2002, vol. 4793, 168-175